# EUROPÄISCHE PATENTSCHRIFT

(11) **EP 0 756 668 B1**
(45) Veröffentlichungstag und Bekanntmachung des Hinweises auf die Patenterteilung: **09.02.2000**
(21) Anmeldenummer: 95931903.9
(22) Anmeldetag: 22.09.1995
(51) Int. Cl.: F02D 41/24, G05B 19/042

(54) **VORRICHTUNG UND VERFAHREN ZUR STEUERUNG EINER BRENNKRAFTMASCHINE**
DEVICE AND PROCESS FOR CONTROLLING AN INTERNAL COMBUSTION ENGINE
PROCEDE ET DISPOSITIF DE REGULATION D'UN MOTEUR A COMBUSTION INTERNE

(30) Priorität: 12.10.1994 DE 4436371
(43) Veröffentlichungstag der Anmeldung: 05.02.1997
(73) Patentinhaber: ROBERT BOSCH GMBH, 70442 Stuttgart (DE)
(72) Erfinder: GERSTUNG, Ulrich, D-71665 Vaihingen (DE); EBERLEIN, Edwin, D-70197 Stuttgart (DE); NEWALD, Josef, D-70469 Stuttgart (DE); ILLG, Bernd, D-75031 Eppingen (DE); FORSTER, Felix, A-1100 Wien (AT); POLEDNA, Stefan, A-1020 Wien (AT); SCHMIDT, Eric, A-2143 Grosskrut (AT)
(86) Internationale Anmeldenummer: DE9501307
(87) Internationale Veröffentlichungsnummer: WO9612099

(56) Entgegenhaltungen:
- EP-A- 0 525 736
- WO-A-87/06975
- WO-A-89/05398
- DE-A- 4 012 003
- DE-A- 4 304 441
- FR-A- 2 591 778
- GB-A- 2 247 757

## Beschreibung

### Stand der Technik

Die Erfindung betrifft ein Verfahren und eine Vorrichtung zur Steuerung einer Brennkraftmaschine. Gemäß den Oberbegriffen der unabhängigen Ansprüche.

Ein Verfahren und eine Vorrichtung zur Steuerung einer Brennkraftmaschine in einem Kraftfahrzeug ist aus der EP 0 525 736 A1 bekannt. Diese Schrift beschreibt ein System zur Speicherung von Daten. In einem ersten Speichermittel sind wenigstens zwei Datensätze abgelegt. In einer bevorzugten Speicherzelle eines jeden Datensatzes ist eine Kennung abgelegt.

In der DE-OS 37 23 024 wird eine Vorrichtung zur Steuerung einer Brennkraftmaschine in einem Kraftfahrzeug beschrieben, die mindestens einen Mikroprozessor enthält. In mindestens einem ersten Speichermittel sind mehrere Varianten von Datensätzen unter verschiedenen Kennungen abgelegt. Bei diesem Stand der Technik müssen die Adressen der einzelnen Datensätze bekannt und in einem sog. Vektorfeld abgespeichert werden.

Aus der WO-A 890538 ist eine Steuerung für ein Kraftfahrzeug bekannt, bei dem verschiedene Daten mit verschiedenen Paßwörtern geschützt sind. Dieser Vorgehensweise liegt die Aufgabe zugrunde, das unterschiedliche Daten nur einem unterschiedlichen Personenkreis zugänglich sein sollen und diese unterschiedlichen Daten daher mit unterschiedlichen Paßwörtern geschützt sind. Bei Aufruf eines bestimmten Programmes oder bei einem Versuch der Programmierung der Daten wird jeweils die Eingabe des entsprechenden Paßworts verlangt. Dieses Paßwort ist direkt in dem jeweiligen Datensatz abgespeichert.

Desweiteren sind Vorrichtungen und Verfahren bekannt, bei denen am Ende der Fertigung der komplette Datensatz bzw. Teile des Datensatzes einprogrammiert werden. Nachteilig bei diesen Einrichtungen ist, daß Mittel vorgesehen sein müssen, die anhand der abgespeicherten Adressen, bei denen die Daten abgelegt sind, den richtigen Datensatz auswählen.

Wünschenswert ist es, daß ein Steuergerät für mehrere Fahrzeugvarianten verwendet werden kann. Hierdurch läßt sich die Lagerhaltung bei den Steuergeräten vereinfachen. Nach der Montage des Steuergeräts im Fahrzeug soll die entsprechende Variante ausgewählt werden. So kann beispielsweise vorgesehen sein, daß Fahrzeuge eines Typs mit Handschaltgetriebe oder mit Automatik, mit oder ohne ASR ausgerüstet sind. Ferner können unterschiedliche Leistungsstufen als Varianten bezeichnet werden.

### Aufgabe der Erfindung

Der Erfindung liegt die Aufgabe zugrunde, bei einem Verfahren und einer Vorrichtung zur Steuerung von Brennkraftmaschinen der eingangs genannten Art die Variantenkodierung zu vereinfachen.

Durch die Merkmalskombination der unabhängigen Ansprüche ist es möglich, daß die Datensätze im physikalischen Speicher beliebig angeordnet werden können. Soll im späteren Betrieb auf die Daten zugegriffen werden, um sie beispielsweise zu ändern, muß lediglich die Kennung und nicht die Adresse im Speicher bekannt sein.

Desweiteren können Verwechslungen insbesondere im Kundendienst ausgeschlossen werden. Auch ist es möglich, bei einer späteren Generation von Steuergeräten die Datensätze an unterschiedlichen Adressen abzulegen.

Besonders vorteilhafte Ausführungsformen sind in den Unteransprüchen gekennzeichnet.

### Zeichnung

Ein Ausführungsbeispiel der Erfindung wird anhand der Zeichnung näher erläutert. Es zeigen Figur 1 ein Blockschaltbild eines erfindungsgemäßen Steuergeräts, Figur 2 die Struktur der im Steuergerät abgelegten Daten und Figur 3 ein Flußdiagramm des erfindungsgemäßen Verfahrens.

### Beschreibung des Ausführungsbeispiels

Bei der Steuerung der hier beschriebenen Art handelt es sich um eine elektronische Steuerung mit mindestens einem Mikroprozessor, zumindestens einem ersten und zweiten Speichermittel. Diese Steuergeräte werden bei der Herstellung eines Fahrzeuges an geeigneter Stelle eingebaut. Dabei sind die Steuergeräte für verschiedene Fahrzeugtypen und -ausführungen identisch. Sie enthalten Berechnungsprogramme, beispielsweise für verschiedene Motorsteuerungsdaten, wie die einspritzende Kraftstoffmenge, sowie ein Programm zur Selektion der für die Berechnungsprogramme erforderlichen Daten. Diese sog. Basisprogramme sind in einem fest programmierten Speicher des Steuergeräts abgelegt.

Am Ende eines Kraftfahrzeugmontagebandes kann der Verwender des Steuergeräts, der Kraftfahrzeughersteller fahrzeugspezifischen Daten in den frei programmierbaren Speicher des Steuergeräts eingeben. Dazu braucht üblicherweise das zum Schutz gegen äußere Einflüsse hermetisch abgeschlossene Steuergerät nicht geöffnet zu werden. Bei dem beschriebenen Ausführungsbeispiel ist vorgesehen, daß die Daten für die unterschiedlichen Varianten von Fahrzeugen vorzugsweise ebenfalls in einem fest programmierbaren Speicher abgelegt sind.

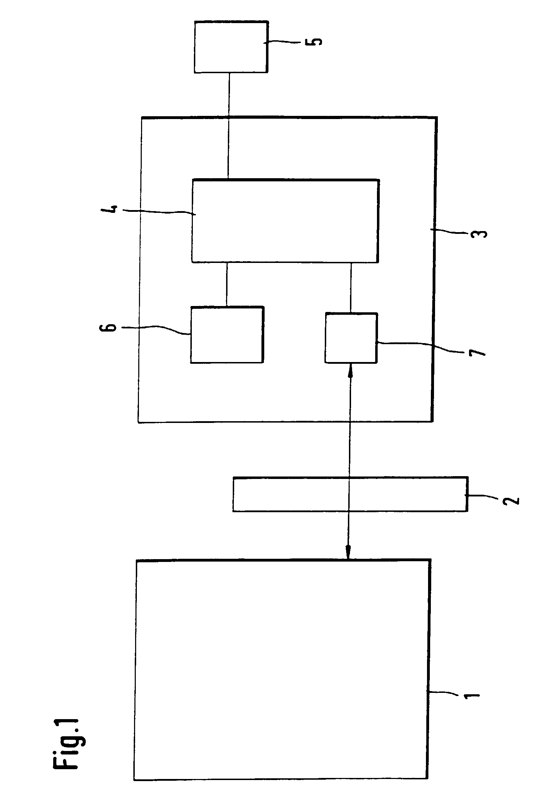

Zur Auswahl eines gewünschten Datensatzes wird das Steuergerät, wie in Figur 1 dargestellt, über eine Steckverbindung mit einer Programmiereinrichtung, einer sog. Programmierstation verbunden.

Figur 1 zeigt ein Blockschaltbild, in dem eine Programmiereinrichtung 1 über eine Steckverbindung 2 mit einem Steuergerät 3 verbunden ist. Das Steuergerät umfaßt im wesentlichen einen Mikroprozessor 4, der mit einem ersten Speichermittel 6 und einem zweiten Speichermittel 7 in Verbindung steht. Vorzugsweise beaufschlagt der Mikroprozessor ein Stellelement 5 mit Ansteuersignalen.

Über eine Leitung steht die Programmiereinrichtung 1 mit dem zweiten Speichermittel 7 in Verbindung. Die Programmiereinrichtung 1 bietet die Möglichkeit, Daten im Speichermittel 7 zu verändern/einzuprogrammieren. Das Steuergerät 3 wählt in einem ersten Schritt ausgehend von den im zweiten Speichermittel 7 abgelegten Daten einen bestimmten Datensatz, der im ersten Speichermittel abgelegten Daten aus. Ausgehend von diesen Daten und von mittels Sensoren erfaßten Bezugsparametern berechnet der Mikroprozessor 4 Ansteuersignale zur Beaufschlagung von Stellelementen 5, die beispielsweise zur Steuerung der eingespritzten Kraftstoffmenge dienen. Zur Vereinfachung der Darstellung sind die Verbindungen des Steuergeräts zu Sensoren und weiteren Stellgliedern des Kraftfahrzeugs nicht wiedergegeben.

Besonders vorteilhaft ist es, wenn das erste Speichermittel als programmierbarer Speicher, insbesondere als E-PROM oder als ROM realisiert ist.

Bei dem zweiten Speichermittel wird vorzugsweise ein frei programmierbaren Speicher, insbesondere ein E²-PROM eingesetzt.

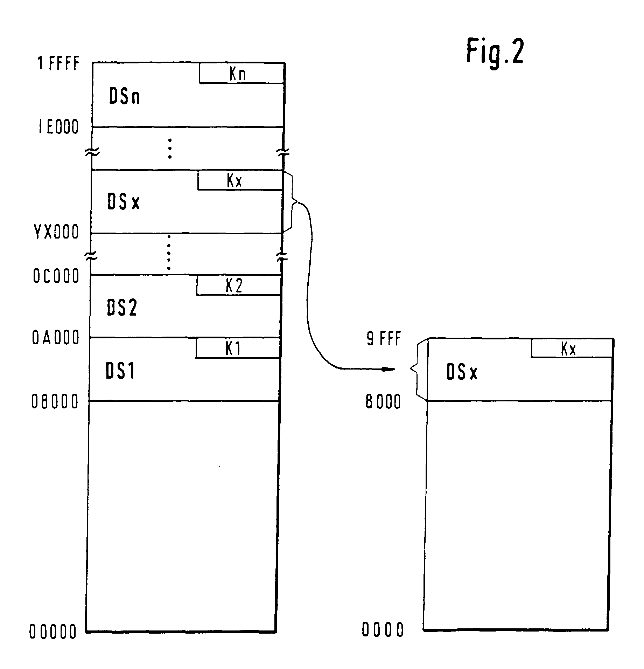

Die verschiedenen Datensätze, die in dem ersten Speichermittel 6 abgelegt sind, belegen verschiedene Speicherbereiche. Diese Belegung ist beispielhaft in Figur 2 dargestellt. Dabei ist zwischen physikalischen Adressen und virtuellen Adressen zu unterscheiden. Der Datensatz DS1 ist zwischen den Speicherzellen 08000 und den Speicherzellen 0A000 abgelegt. Der Datensatz DS2 für eine andere Variante ist zwischen der Speicherzelle 0A000 und der Speicherzelle 0C000 abgelegt. Daran schließen sich weitere Datensätze an. Ein Datensatz DSX, der die Daten der x-ten Variante enthält, ist ab der Speicherzelle YX000 abgelegt. Der letzte Datensatz DSN ist zwischen der Speicherzelle 1E000 und 1FFFF abgespeichert.

Erfindungsgemäß ist nun vorgesehen, daß in einer bestimmten Speicherzelle eines jeden Datensatzes eine Kennung, insbesondere eine Kennziffer abgelegt ist. Diese Kennziffer ist mit K1, für den ersten Satz, mit K2 für den zweiten, mit KX für den x-ten und mit KN für den n-ten Datensatz bezeichnet. Erfindungsgemäß ist vorgesehen, daß diese Kennung an einer definierten Adresse KADR des jeweiligen Datensatzes abgelegt ist. Dies bedeutet die Kennung ist einer bevorzugten Speicherzelle eine jeden Datensatzes abgelegt. So kann beispielsweise vorgesehen sein, daß die Kennung in der ersten Speicherzelle des Bereichs abgelegt ist. Bei einer weiteren Ausgestaltung ist in der ersten Speicherzelle ein Wert oder mehrere Werte abgelegt, der angibt, daß ab dieser Speicherzelle ein neuer Datensatz beginnt. Anschließend an diese Speicherzelle bzw. Speicherzellen ist dann in der nächsten Speicherzelle die Kennung abgelegt.

Bei der Fertigung des Steuergerätes werden alle möglichen Datensätze in dieser Art im ersten Speichermittel 6 abgelegt. Am Ende der Fertigung eines bestimmten Fahrzeuges wird das Steuergerät mit der Programmiereinrichtung 1 verbunden und in das zweite Speicherelement ein Auswahlwert Kₛₒₗₗ abgelegt. Dieser Auswahlwert Kₛₒₗₗ bezeichnet die Fahrzeugvariante. Dabei ist es auch möglich, daß als Auswahlwert ein ASCII-Klartext gespeichert wird, wie beispielsweise Typ 1.

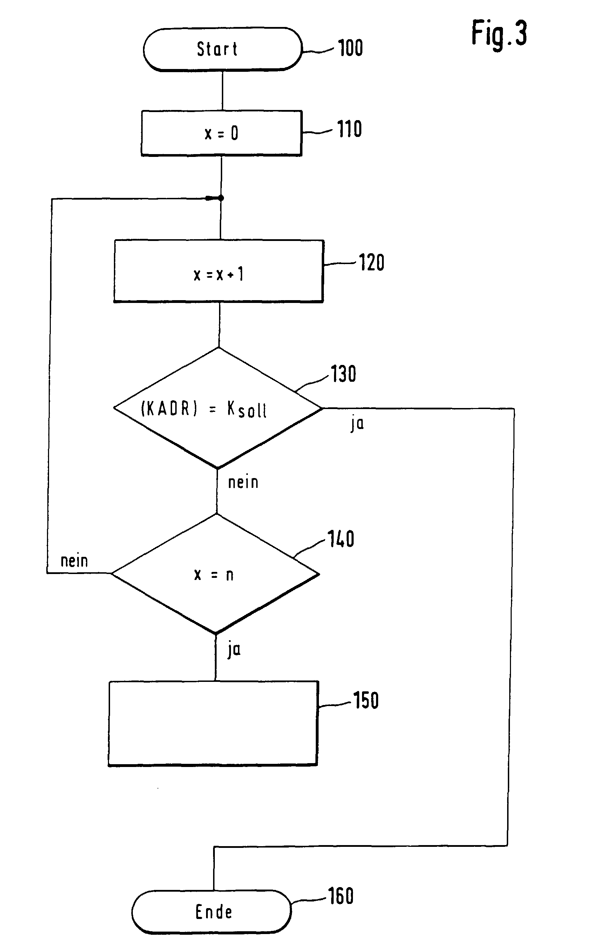

Der Mikroprozessor wählt nun mittels des Auswahlwerts den richtigen Datensatz aus dem ersten Speichermittel 6 aus. Dies erfolgt wie im Flußdiagramm Der Figur 3 dargestellt.

Nach Start und Auslesen des Auswahlwerts aus dem Speichermittel 7 im Schritt 100 wird in Schritt 110 ein Zähler x auf 0 gesetzt. Anschließend wird im Schritt 120 der Zähler x um 1 erhöht und der x-te Datensatz DSX ausgewählt. Die Abfrage 130 überprüft, ob der Inhalt der Speicherzelle mit der Adresse KADR, dem im zweiten Speichermittel 7 abgelegten Auswahlwert K_{soll,} entspricht.

Erkennt die Abfrage 130, daß die beiden Werte gleich sind, so endet das Programm in Schritt 160. Ist dies nicht der Fall, so wird in Schritt 140 überprüft, ob der Zähler größer oder gleich der maximalen Anzahl n der Datensätze ist. Ist dies nicht der Fall, so setzt das Programm mit Schritt 120 fort. Ist der letzte Datensatz erreicht, so wird im Schritt 150 eine Fehlermeldung ausgegeben, die angibt, daß der entsprechende Datensatz in diesem Steuergerät nicht abgespeichert ist.

Durch Vergleich, der an der Adresse KADR eines jeden Datensatzes abgelegten Kennung, mit dem am Bandende in den zweiten Speicher eingegebenen Auswahlwert, wird der zu verwendende Datensatz ausgewählt.

Die Zusammenstellung der Datensätze im ersten Speichermittel ist beliebig möglich. Die Datensätze können in einer beliebigen Reihenfolge abgespeichert werden. Um einen Datensatz aufzufinden, ist es nicht erforderlich, daß die Adresse im Speicher bekannt ist. Dadurch kann auch im Kundendienst sehr einfach auf einen bestimmten Datensatz zugegriffen und dieser geändert werden. Verwechslungen aufgrund sich ändernden Datensätzen und Adressen der Datensätze sind daher ausgeschlossen.

Besonders vorteilhaft ist es, wenn der jeweils neueste Datensatz einer aktuellen Baureihe bei Änderungen desselben an die oberste Stelle des Speichermittels eingefügt wird. Durch Prüfen des obersten Datensatzes ist eine eindeutige Identifizierung des Speichermittels möglich.

So ist zum Beispiel ein Check-Summenabgleich über jeden einzelnen Datensatz möglich, da keine zusätzliche Kennziffer zur Identifikation des Speichermittels erforderlich ist.

Desweiteren ist eine gemischte Lagerhaltung von unterschiedlichen Änderungsständen möglich, da immer erkennbar ist, ob die gewünschte Variante im Steuergerät verfügbar ist.

## Patentansprüche

1. Verfahren zur Steuerung von Brennkraftmaschinen in Kraftfahrzeugen, mit wenigstens einem Mikroprozessor, wobei in einem ersten Speichermittel wenigstens zwei Datensätze abgelegt sind, daß in einer bevorzugten Speicherzelle eines jeden fortlaufend abgespeicherten Datensatzes eine Kennung abgelegt ist, dadurch gekennzeichnet, daß in einem zweiten Speichermittel ein Auswahlwert abgelegt ist, daß mittels der Kennung und des Auswahlwerts ein bestimmter Datensatz ausgewählt wird.

2. Verfahren nach Anspruch 1, dadurch gekennzeichnet, daß der Datensatz ausgewählt wird, bei dem die Kennung mit dem Auswahlwert übereinstimmt.

3. Vorrichtung zur Steuerung von Brennkraftmaschinen in Kraftfahrzeugen, mit wenigstens einem Mikroprozessor, wobei in einem ersten Speichermittel wenigstens zwei Datensätze abgelegt sind, wobei eine bevorzugte Speicherzelle eines jeden fortlaufend abgespeicherten Datensatzes eine Kennung beinhaltet, dadurch gekennzeichnet, daß in einem zweiten Speichermittel ein Auswahlwert abgelegt ist, wobei Mittel vorgesehen sind, die mittels der Kennung und des Auswahlwerts einen bestimmten Datensatz auswählen.

4. Vorrichtung nach Anspruch 3, dadurch gekennzeichnet, daß es sich bei dem ersten Speichermittel um einen programmierbaren Speicher, insbesondere ein E-PROM oder ein ROM, handelt.

5. Vorrichtung nach einem der Ansprüche 3 oder 4, dadurch gekennzeichnet, daß es sich bei dem zweiten Speichermittel um einen frei programmierbaren Speicher, insbesondere ein E2-PROM, handelt.

## Claims

1. Method for controlling internal-combustion engines in motor vehicles, with at least one microprocessor, at least two data records being filed in a first storage means, and an identification code being filed in a preferred storage cell of each continuously stored data record, characterized in that a selection value is filed in a second storage means, and in that a specific data record is selected by means of the identification code and the selection value.

2. Method according to Claim 1, characterized in that the data record in which the identification code is identical to the selection value is selected.

3. Device for controlling internal-combustion engines in motor vehicles, with at least one microprocessor, at least two data records being filed in the first storage means, and the preferred storage cell of each continuously stored data record containing an identification code, characterized in that a selection value is filed in a second storage means, means being provided which select a specific data record by means of the identification code and the selection value.

4. Device according to Claim 3, characterized in that the first storage means is a programmable memory, in particular an EPROM or a ROM.

5. Device according to one of Claims 3 or 4, characterized in that the second storage means is a freely programmable memory, in particular an E2-PROM.

## Revendications

1. Procédé de commande d'un moteur à combustion interne dans un véhicule automobile comprenant au moins un microprocesseur et au moins deux jeux de données enregistrées dans une première mémoire, et ayant une référence dans une cellule préférentielle de chaque jeu de données enregistrées en continu,
caractérisé en ce que
dans une seconde mémoire on a enregistré une valeur de sélection permettant de sélectionner un certain jeu de données au moyen de la référence et de la valeur de sélection.

2. Procédé selon la revendication 1,
caractérisé en ce qu'
on choisit le jeu de données dont la référence correspond à pour la valeur de sélection.

3. Dispositif de commande de moteurs à combustion interne de véhicules automobiles, avec au moins un microprocesseur selon lequel une première mémoire contient au moins deux jeux de données, une cellule de mémoire préférentielle de chaque jeu de données mémorisées en continu contenant une référence,
caractérisé en ce que
• dans une seconde mémoire, on enregistre une valeur de sélection,
• des moyens sont prévus pour sélectionner un certain jeu de données à l'aide de la référence et de la valeur de sélection.

4. Dispositif selon la revendication 3,
caractérisé en ce que
la première mémoire est une mémoire programmable, notamment une mémoire E-PROM ou une mémoire ROM.

5. Dispositif selon l'une des revendications 3 ou 4,
caractérisé en ce que
la seconde mémoire est une mémoire librement programmable, notamment une mémoire E2-PROM.
